# EUROPÄISCHE PATENTSCHRIFT

(11) **EP 0 779 091 B1**
(45) Veröffentlichungstag und Bekanntmachung des Hinweises auf die Patenterteilung: **14.04.1999**
(21) Anmeldenummer: 96111424.6
(22) Anmeldetag: 16.07.1996
(51) Int. Cl.: B01D 35/30

(54) **Filterdeckel für ein Kraftstoffilter**
Cap for fuel filter
Couvercle de filtre de carburant

(30) Priorität: 15.12.1995 DE 29519920 U
(43) Veröffentlichungstag der Anmeldung: 18.06.1997
(73) Patentinhaber: ROBERT BOSCH GMBH, 70442 Stuttgart (DE)
(72) Erfinder: Lucas, Bernhard, 74395 Mundelsheim (DE); Projahn, Ulrich, 28109 El Soto, Madrid (ES); Juara, Candido, 28804 Alcala de Henares, Madrid (ES)

(56) Entgegenhaltungen:
- EP-A- 0 512 144
- EP-A- 0 655 269
- EP-A- 0 658 362
- EP-A- 0 684 065
- DE-A- 1 425 602
- DE-A- 3 152 587
- DE-A- 4 009 224

## Beschreibung

### Stand der Technik

Die Erfindung geht aus von einem Filterdeckel für ein Kraftstoffilter nach der im Oberbegriff des Anspruchs 1 näher angegebenen Gattung.

Es ist schon ein solcher Filterdeckel für ein Kraftstoffilter aus der DE 43 40 024 A1 bekannt, an dem zwei Anschlußstutzen für Zulauf und Ablauf sowie eine Halterung zur Aufnahme eines Ventils zur Kraftstoffrückführung angeordnet sind. Die außen am Deckel befestigte Halterung mit zwei schalenförmigen Haltearmen ist mit Hilfe einer zusätzlichen Buchse am Deckel befestigt, wobei zur Befestigung zwei Lötstellen erforderlich sind. Das zum Einbau in die Halterung vorgesehene, nicht näher gezeichnete Ventil mit seinen drei Anschlüssen hat ein zylindrisches Gehäuse, das zwischen die Haltearme eingesteckt ist und durch eine in die Halterung eingesteckte Drahtspange unverlierbar und lösbar gehalten wird. Ein verdickter Bund der Buchse nimmt an seinem Außendurchmesser in seiner Ringnut einen Dichtring auf, der am Gehäuse anliegt und die Abdichtung nach außen übernimmt. Dieser Filterdeckel erfordert für die Befestigung und Abdichtung des Kraftstoffrückführungs-Ventils einen relativ hohen Aufwand, da neben der Halterung eine zusätzliche Buchse erforderlich ist und zu deren Befestigung zwei Lötstellen notwendig sind. Ferner kann es ungünstig sein, daß die Abdichtung am Außendurchmesser der Buchse und damit an einem relativ großen Durchmesser erfolgt. Die schalenförmigen Haltearme umfassen das zylindrische Gehäuse nur an einem Teil seines Umfangs, so daß dessen Führung nicht optimal ist. Ferner kann es in manchen Fällen ungünstig sein, daß das Gehäuse des Ventils in der Halterung zwei Einbaulagen einnehmen kann, so daß beim Anschließen der beiden radialen Anschlußstutzen im Ventil an zugeordnete Druckmittelschläuche Verwechslungen auftreten können. Ferner besteht die Gefahr, daß durch den auftretenden Unterdruck im Kraftstoffilter und bei Vibrationen im Betrieb durch Bewegungen des Ventils in seiner Halterung von außen Luft in das Kraftstoffsystem gesaugt werden kann, was zu Fahrstörungen führt.

Ferner ist aus der EP 0 166 160 A1 ein Filter für Dieselkraftstoff bekannt, in dessen Filterdeckel ein Ventil zur Kraftstoffrückführung integriert ist. Hier ist der prinzipielle und konstruktive Aufbau eines solchen Ventils zur Kraftstoffrückführung gezeigt, das mit seinen drei Anschlüssen zwischen den Überströmanschluß der Einspritzpumpe, den Kraftstofftank und die Schmutzseite des Kraftstoffilters geschaltet ist. Bei diesem Filter handelt es sich um eine aufwendige Deckelbauweise, bei der das Ventil zur Kraftstoffrückführung nicht austauschbar angeordnet ist.

### Vorteile der Erfindung

Der erfindungsgemäße Filterdeckel für ein Kraftstoffilter mit den kennzeichnenden Merkmalen des Hauptanspruchs hat demgegenüber den Vorteil, daß er eine einfache und kostengünstige Bauweise ermöglicht, mit welcher ein austauschbares, am Filterdeckel angeordnetes Kraftstoffrückführungs-Ventil sicher befestigt und wirksam abgedichtet werden kann. Bei dem Filterdeckel läßt sich die Befestigung des Ventils mit verringerter Anzahl der Teile und der Löt- bzw. Schweißstellen durchführen, zumal eine gesonderte Buchse entfällt. Durch die Anordnung des Dichtrings auf einem kleineren Durchmesser läßt sich eine wirksamere und kostengünstigere Abdichtung erreichen. Zudem baut der Filterdeckel platzsparend und kostengünstig und läßt sich bei bereits vorhandenen Kraftstoffiltern einsetzen.

Durch die in den Unteransprüchen aufgeführten Maßnahmen sind vorteilhafte Weiterbildungen und Verbesserungen des im Hauptanspruch angegebenen Filterdeckels möglich. Durch eine Ausbildung nach Anspruch 2 läßt sich die Abdichtung besonders einfach, kostengünstig und sicher gestalten. Ferner ist es zweckmäßig, wenn durch eine Ausbildung nach Anspruch 3 das Ventil nur eine einzige Einbaulage aufweist, so daß die Gefahr von Fehlanschlüssen vermieden wird. Vorteilhaft ist weiterhin eine Ausbildung nach Anspruch 4, wodurch neben einfacher Montage eine sichere Abdichtung erreicht wird. Auch wird durch die doppeltwirkende Drahtspange die Bewegung des Ventils in seiner Halterung bei Vibrationen des Kraftstoffilters eingeschränkt, so daß ein störendes Nachsaugen von Luft auch bei ungünstigen Betriebsbedingungen vermieden wird. Weitere vorteilhafte Ausgestaltungen ergeben sich aus den übrigen Ansprüchen, der Beschreibung sowie der Zeichnung.

### Zeichnung

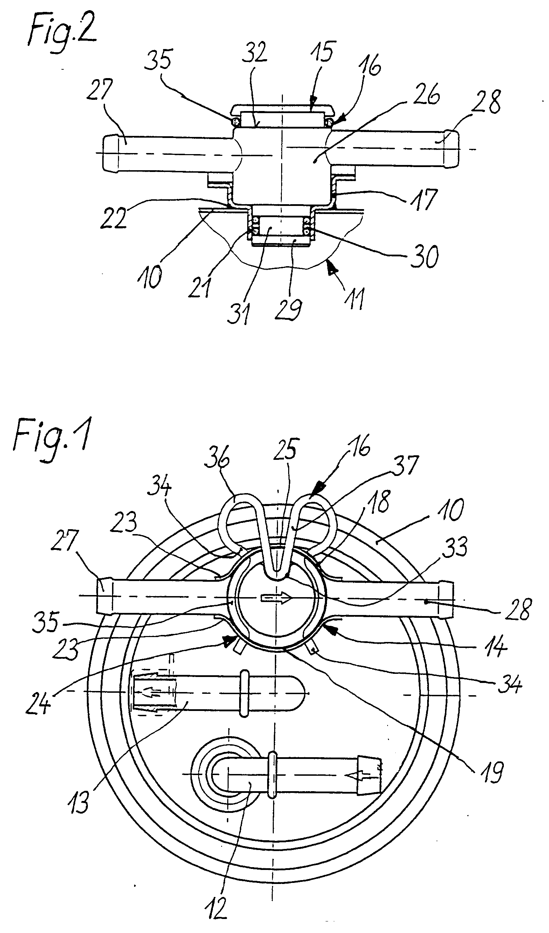

Ein Ausführungsbeispiel der Erfindung ist in der Zeichnung dargestellt und in der nachfolgenden Beschreibung näher erläutert. Es zeigen Figur 1 eine Draufsicht auf einen Filterdeckel für ein Kraftstoffilter und Figur 2 als Einzelheit einen Längsschnitt durch die Halterung mit dem eingesetzten Ventil für die Kraftstoffrückführung nach Figur 1.

### Beschreibung des Ausführungsbeispiels

Die Figur 1 zeigt in Draufsicht einen Filterdeckel 10 für ein Kraftstoffilter 11. Am Filterdeckel 10 sind ein Zulauf-Anschluß 12 sowie ein Ablauf-Anschluß 13 angeordnet, die beide als rohrförmige, winkelförmige umgebogene Schlauchanschlußstutzen ausgeführt sind. Zwischen dem zentral im Filterdeckel 10 befestigten Ablauf-Anschluß 13 und dem Außenumfang des Filterdeckels 10 ist nahe dem äußeren Rand des Filterdeckels 10 eine Halterung 14 befestigt, in die ein austauschbar angeordnetes Ventil 15 für die Kraftstoffrückführung eingesetzt ist. Das Ventil 15 wird durch eine in die Halterung 14 eingesteckte Drahtspange 16 unverlierbar und lösbar in der Halterung gesichert. Die Verschaltung dieses Ventils 15 für die Kraftstoffrückführung mit seinen drei Anschlüssen für die Verbindungen zu einem Überströmanschluß der Einspritzpumpe, zum Kraftstofftank und zur Schmutzseite des Kraftstoffilters 11 wird als an sich bekannt aus der eingangs genannten EP 0 166 160 A1 vorausgesetzt.

Wie die Figur 1 in Verbindung mit Figur 2, die einen Längsschnitt durch die Halterung 14 mit eingesetztem Ventil 15 darstellt, näher zeigt, weist die Halterung 14 einen becherförmigen Abschnitt 17 auf, der nach außen zu in zwei frei auskragende, schalenartige Haltearme 18, 19 übergeht, während er in entgegengesetzt zu den Haltearmen liegender Richtung in einen hülsenförmigen Abschnitt 21 mit kleinerem Durchmesser ausläuft. Der becherförmige Abschnitt 17 sitzt mit seinem Boden außen auf dem Filterdeckel 10 auf und ist durch eine ringförmige Lötstelle 22 dicht und fest mit dem Filterdeckel 10 verbunden. Mit dem Abschnitt 21 mit kleinerem Durchmesser ist die Halterung 14 in einer im Filterdeckel 10 angeordneten Bohrung zentriert, wobei der Abschnitt 21 in das Innere des Kraftstoffilters 11 hineinragt. Die beiden Haltearme 18, 19 weisen an ihren seitlichen Rändern jeweils nach außen gekrümmte Führungsflächen 23 auf. Ferner sind an den beiden Haltearmen 18, 19 nahe deren freien Enden jeweils symmetrisch zwei Einstecköffnungen 24 ausgebildet, welche zum Befestigen der Drahtspange 16 dienen. In dem außenliegenden Haltearm 18 ist zusätzlich zwischen dessen beiden Einstecköffnungen 24 ein Einstecksschlitz 25 ausgeführt.

Die Halterung 14 nimmt zwischen ihren beiden Haltearmen 18, 19 das Ventil 15 auf, an dessen zylindrischem Gehäuse 26 die drei Anschlüsse 27, 28, 29 angeordnet sind. Die beiden Anschlüsse 27, 28 sind als rohrförmige Anschlußstutzen ausgeführt, die vom Gehäuse 26 radial nach außen in entgegengesetzten Richtungen ragen und wie der Zulauf- und Ablaufanschluß 12, 13 als Schlauchanschlußstutzen ausgeführt sind. Der dritte Anschluß 29 am Gehäuse 26 ist als axial verlaufender, nach unten ragender Rohrstutzen ausgebildet, mit dem das Ventil 15 in den hülsenförmigen Abschnitt 21 ragt. Eine außen am Rohrstutzen 29 liegende Ringnut 31 nimmt zwei Dichtringe 30 auf, welche an der Innenwand des Abschnitts 21 anliegen, wodurch eine Abdichtung des Inneren des Kraftstoffilters 11 nach außen erreicht wird. Das zylindrische Gehäuse 26 weist an seinem dem Rohrstutzen 29 entgegengesetzt liegenden Ende einen ringförmigen Absatz 32 auf, der bei montiertem Ventil 15 in der Höhe der Einstecköffnungen 24 der Halterung 14 liegt. Am Umfang dieses ringförmigen Absatzes ist an einer Stelle im Gehäuse 26 eine Sicherungs-Ausnehmung 33 eingearbeitet.

Wie Figur 1 in Verbindung mit Figur 2 näher zeigt, wird das Ventil 15 durch die Drahtspange 16 unverlierbar in der Halterung 14 gesichert. Die symmetrisch ausgebildete Drahtspange 16 ist mit ihren zwei federnden Armen 34, 35 durch die Einstecköffnungen 24 der Halterung 14 hindurchgesteckt, wobei deren bogenförmige Abschnitte 35 auf dem ringförmigen Absatz 32 verlaufen und dabei das Gehäuse 26 in seiner Lage sichern. Die innenliegenden Enden der beiden Arme 34 sind jeweils über eine Öse 36 und einen V-förmigen Bügel 37 miteinander verbunden. Der V-förmige Bügel ragt mit seiner Spitze durch den äußeren Haltearm 18 hindurch und in die Sicherungs-Ausnehmung 33 am Gehäuse 26 hinein, so daß das Ventil 15 nur eine einzige Einbaulage aufweist. Die Drahtspange 16 kann dabei eine solche Vorspannung aufweisen, daß ihr V-förmiger Bügel 37 das Gehäuse 26 in axialer Richtung fest in die Halterung 14 drückt, um Bewegungen des Ventils 15 bei Vibrationen des Filterdeckels 10 zu verringern bzw. zu vermeiden.

Der Filterdeckel 10 mit der Befestigung des Ventils 15 für die Kraftstoffrückführung baut besonders einfach und kostengünstig, ermöglicht eine sichere Abdichtung nach außen und gewährleistet einen leichten Austausch des Ventils 15. Die einteilig bauende und aus Blech herstellbare Halterung 14 ist so ausgebildet, daß nun der Dichtungssitz in sie eingearbeitet ist. Die Doppelanordnung von O-Ringen zur Abdichtung des in das Innere des Kraftstoffilters 11 führenden Rohrstutzens 31 ist auch deswegen besonders wirksam, weil nunmehr eine Abdichtung auf relativ kleinem Durchmesser vorgenommen wird. Die schalenförmig ausgebildeten Haltearme 18, 19 mit ihren in entgegengesetzter Richtung gebogenen, seitlichen Führungsflächen 23 sorgen für eine einwandfreie Führung des Gehäuses 26 in der Halterung 14. Zur dichten Befestigung der Halterung 14 am Filterdeckel 10 genügt eine einzige Lötstelle, die bei Bedarf auch als Schweißstelle ausgeführt werden kann. Zudem ist die Befestigung des Ventils 15 so ausgeführt, daß es nur eine einzige Einbaulage in der Halterung 14 einnehmen kann und damit eine Fehlmontage ausgeschlossen wird. Die federnd ausgebildete Drahtspange 16 ermöglicht bei kostengünstiger Bauweise eine sichere Halterung und erlaubt zudem eine schnelle und einfache Montage bzw. Demontage des Ventils 15. Ferner lassen sich mit der doppeltwirkenden Drahtspange 16 störende Bewegungen des Ventils 15 bei Vibrationen im Betrieb erheblich verringern bzw. vermeiden.

Die Wirkungsweise des Kraftstoffilters 11, dem der zu reinigende Kraftstoff über den Zulauf-Anschluß 12 zugeführt wird, bei dem der gereinigte Kraftstoff vom Ablauf-Anschluß 13 abströmt, bei dem der vom Überström-Anschluß einer Einspritzpumpe kommende Kraftstoff über den Anschlußstutzen 27 dem Ventil 15 zugeführt wird, das temperaturabhängig diesen Strom über den Anschlußstutzen 28 zum Tank zurückführt und/oder den Kraftstoffstrom über den Rohrstutzen 29 auf die Schmutzseite des Kraftstoffilters 11 leitet, wird als an sich bekannt vorausgesetzt.

Selbstverständlich sind Änderungen an der gezeigten Ausführungsform möglich, ohne vom Gedanken der Erfindung abzuweichen. So können die Einstecköffnungen 24 in den beiden Haltearmen 18, 19 auch als Schlitze ausgeführt werden, die alle in der gleichen Ebene liegen und die nach außen hin, also in den Führungsflächen 23, offen sind; dadurch läßt sich die Montage der Drahtspange 16 erleichtern.

## Patentansprüche

1. Filterdeckel für ein Kraftstoffilter, mit am Deckel angeordneten Anschlüssen für Zulauf und Ablauf und mit einem am Deckel angeordneten Ventil für die Kraftstoff-Rückführung, dessen Gehäuse in eine außen am Deckel befestigte Halterung eingesetzt und durch eine in die Halterung einbaubare Drahtspange unverlierbar und lösbar gehalten ist, wobei ein in das Innere des Kraftstoffilters führender Anschluß des Ventils durch einen Dichtring gegenüber dem Deckel nach außen hin abgedichtet wird und an welchen Deckel die Halterung mit einem becherförmigen Abschnitt angrenzt, der nach außen zu in zwei frei auskragende Haltearme übergeht, in welche das zylindrisch ausgebildete Gehäuse einsetzbar ist, an dem zwei radial verlaufende und zueinander entgegengesetzt liegende Anschlußstutzen ausgebildet sind, dadurch gekennzeichnet, daß die Halterung (14) an ihrem becherförmigen Abschnitt (17) auf der entgegengesetzt zu den Haltearmen (18, 19) liegenden Seite in einen hülsenförmigen Abschnitt (21) mit kleinerem Durchmesser übergeht und daß das Gehäuse (26) mit einem Rohrstutzen (29), der den in das Innere des Kraftstoffilters (11) führenden Anschluß bildet, in diesen Abschnitt (21) ragt und daß der Dichtring (30) in diesem Abschnitt (21) angeordnet ist.

2. Filterdeckel nach Anspruch 1, dadurch gekennzeichnet, daß der Dichtring (30) in einer Ringnut (31) außen am Rohrstutzen (29) angeordnet ist, insbesondere daß in der Ringnut (31) zwei derartige Dichtringe (30) angeordnet sind.

3. Filterdeckel nach Anspruch 1 oder 2, dadurch gekennzeichnet, daß die Drahtspange (16) und das Gehäuse (26) so ausgebildet sind, daß das Ventil (15) in der Halterung (14) lediglich eine einzige Einbaulage aufweist.

4. Filterdeckel nach Anspruch 3, dadurch gekennzeichnet, daß die symmetrisch ausgebildete Drahtspange (16) zwei federnde Arme (34) mit je einem Bogenabschnitt (35) aufweist, welche das Gehäuse (26) an einem ringförmigen Absatz (32) übergreifen, wobei die beiden Arme (34) durch symmetrisch liegende Einstecköffnungen (24) in den Haltearmen (18, 19) greifen und daß beide Arme (34) über einen V-förmigen Bügel (37) miteinander verbunden sind, der radial in eine Sicherungs-Ausnehmung (33) in Höhe des Absatzes (32) des Gehäuses (26) greift.

5. Filterdeckel nach Anspruch 4, dadurch gekennzeichnet, daß die beiden Enden des V-förmigen Bügels (37) mit den beiden Armen (34) über federnde Ösen (36) verbunden sind.

6. Filterdeckel nach einem der Ansprüche 1 bis 5, dadurch gekennzeichnet, daß die Halterung (14) einstückig ausgebildet ist und mit dem Deckel (10) verlötet bzw. verschweißt ist, insbesondere im Bereich des becherförmigen Abschnitts (17).

7. Filterdeckel nach einem der Ansprüche 1 bis 6, dadurch gekennzeichnet, daß an den schalenförmig ausgebildeten Haltearmen (18, 19) seitlich nach außen gekrümmte Führungsflächen (23) angeformt sind, welche das Gehäuse (26) mit seinen beiden rohrförmigen Anschlußstutzen (27, 28) gegen Verdrehung gesichert führen.

8. Filterdeckel nach einem der Ansprüche 1 bis 7, dadurch gekennzeichnet, daß die Drahtspange (16) so vorgespannt ist, daß sie das Gehäuse (26) in die Halterung (14) hineindrückt.

9. Filterdeckel nach einem der Ansprüche 1 bis 8, dadurch gekennzeichnet, daß die Anschlüsse für Zulauf (12) und Ablauf (13) sowie beide Anschlußstutzen (27, 28) des Ventils (15) als Schlauchanschlußstutzen ausgeführt sind, die insbesondere in zueinander parallelen Richtungen und in der gleichen radialen Ebene liegen.

10. Filterdeckel nach einem der Ansprüche 4 bis 9, dadurch gekennzeichnet, daß die den beiden Armen (34) der Drahtspange (16) zugeordneten Einstecköffnungen (24) in den beiden Haltearmen (18, 19) als einseitig offene Schlitze ausgebildet sind.

## Claims

1. Filter cover for a fuel filter, having inlet and outlet connections arranged on the cover and having a fuel-return valve arranged on the cover, the housing of which valve is inserted into a holder, which is fastened to the outside of the cover, and is held captively and releasably by means of a wire clasp which can be fitted in the holder, a valve connection which leads into the interior of the fuel filter being sealed off to the outside from the cover by means of a sealing ring and the holder adjoining the cover with a cup-shaped section which merges towards the outside into two freely protruding retaining arms into which can be inserted the cylindrically designed housing on which are formed two connecting studs which extend radially and lie in opposite directions to each other, characterized in that on that side which lies opposite to the retaining arms (18, 19), the holder (14) merges at its cup-shaped section (17) into a sleeve-shaped section (21) of smaller diameter, and in that the housing (26) protrudes, by means of a tubular stub (29) which forms the connection leading into the interior of the fuel filter (11), into this section (21), and in that the sealing ring (30) is arranged in this section (21).

2. Filter cover according to Claim 1, characterized in that the sealing ring (30) is arranged in an annular groove (31) on the outside of the tubular stub (29), in particular in that two such sealing rings (30) are arranged in the annular groove (31).

3. Filter cover according to Claim 1 or 2, characterized in that the wire clasp (16) and the housing (26) are designed in such a manner that the valve (15) has just one installation position in the holder (14).

4. Filter cover according to Claim 3, characterized in that the symmetrically designed wire clasp (16) has two resilient arms (34) each having a curved section (35), which curved sections grip over the housing (26) at an annular shoulder (32), the two arms (34) gripping through symmetrical insert openings (24) in the retaining arms (18, 19), and in that the two arms (34) are connected to each other via a V-shaped clip (37) which grips radially into a securing recess (33) level with the shoulder (32) of the housing (26).

5. Filter cover according to Claim 4, characterized in that the two ends of the V-shaped clip (37) are connected to the two arms (34) via resilient lugs (36).

6. Filter cover according to one of Claims 1 to 5, characterized in that the holder (14) is of unipartite design and is soldered or welded to the cover (10), in particular in the region of the cup-shaped section (17).

7. Filter cover according to one of Claims 1 to 6, characterized in that on the saucer-shaped retaining arms (18, 19) there are integrally formed guide surfaces (23) which are curved laterally outwards and guide the housing (26) by means of its two tubular connecting stubs (27, 28) in a manner such that it is secured against rotation.

8. Filter cover according to one of Claims 1 to 7, characterized in that the wire clasp (16) is pretensioned in such a manner that it presses the housing (26) into the holder (14).

9. Filter cover according to one of Claims 1 to 8, characterized in that the inlet connection (12) and outlet connection (13) and also the two connecting stubs (27, 28) of the valve (15) are designed as tubular connecting stubs which in particular lie in directions which are parallel to one another and in the same, radial plane.

10. Filter cover according to one of Claims 4 to 9, characterized in that the insert openings (24) in the two retaining arms (18, 19), which openings are assigned to the two arms (34) of the wire clasp (16), are designed as slots which are open on one side.

## Revendications

1. Couvercle de filtre pour un filtre de carburant, avec des raccords, disposés sur le couvercle, pour l'arrivée et le départ et avec une vanne, disposée sur le couvercle, pour le retour du carburant, dont le boîtier est inséré dans un support, fixé sur le couvercle, et est maintenu, d'une façon imperdable et amovible, par un tendeur en fil d'acier qui peut être montée dans le support, un raccord de la vanne qui conduit à l'intérieur du filtre de carburant, étant rendu étanche vers l'extérieur par une bague d'étanchéité par rapport au couvercle et le support étant adjacent audit couvercle par une section en forme de cuvette, qui vient en saillie vers l'extérieur dans deux bras de maintien débordant librement, bras dans lesquels on peut insérer le boîtier constitué de façon cylindrique, et sur lequel sont formés deux ajutages de raccordement, qui s'étendent radialement et qui se trouvent en sens opposé l'un par rapport à l'autre,
caractérisé en ce que
• le support (14) se transforme sur sa section en forme de cuvette (17) sur le côté qui se trouve opposé aux bras de maintien (18, 19) en une section (21), ayant la forme d'un manchon, avec un plus petit diamètre,
• le boîtier (26) pénètre dans cette section (21) par un ajutage tubulaire (29 qui forme le raccord qui conduit à l'intérieur du filtre de carburant (11), et
• la bague d'étanchéité (30) est disposée dans cette section (21).

2. Couvercle de filtre selon la revendication 1,
caractérisé en ce que
• la bague d'étanchéité (30) est disposée dans une rainure annulaire (31) à l'extérieur sur l'ajutage tubulaire (29), en particulier,
• dans la bague annulaire (31) sont disposées deux bagues d'étanchéité de ce type (30).

3. Couvercle de filtre selon la revendication 1 ou 2,
caractérisé en ce que
le tendeur en fil d'acier (16) et le boîtier (26) sont constitués d'une façon telle que la vanne (15) présente dans le support (14) uniquement une seule position de montage.

4. Couvercle de filtre selon la revendication 3,
caractérisé en ce que
• le tendeur en fil d'acier (16) qui est constituée d'une façon symétrique, présente deux bras (34) qui font ressort, avec chacun une section en forme d'arc (35), bras qui viennent en prise sur un appendice (32) en forme d'anneau, les deux bras (34) venant en prise à travers des orifices d'enfichage (24) disposés symétriquement dans les bras de maintien (18, 19) et
• les deux bras (34) sont reliés l'un à l'autre au moyen d'un étrier en forme de V (37) qui vient en prise radialement dans un évidement de blocage (33) à la hauteur de l'appendice (32) du boîtier (26).

5. Couvercle de filtre selon la revendication 4,
caractérisé en ce que
les deux extrémités de l'étrier en forme de V (37) sont reliées aux deux bras (34) au moyen d'oeillets à ressort (36).

6. Couvercle de filtre selon l'une des revendications 1 à 5,
caractérisé en ce que
le support (14) est constitué d'une seule pièce, et est brasé ou soudé avec le couvercle (10), en particulier dans la zone de la section (17) en forme de cuvette.

7. Couvercle de filtre selon l'une des revendications 1 à 6,
caractérisé en ce qu'
on forme sur les bras de maintien (18, 19), constitués en forme de coquille, des surfaces de guidage (23), courbées latéralement vers l'extérieur qui guident le boîtier (26) par ses deux ajutages de raccordement (27, 28) de forme tubulaire en l'empêchant de tourner.

8. Couvercle de filtre selon l'une des revendications 1 à 7,
caractérisé en ce que
le tendeur en fil d'acier (16) est précontraint de telle sorte qu'elle presse le boîtier (26) dans le support (14).

9. Couvercle de filtre selon l'une des revendications 1 à 8,
caractérisé en ce que
les raccords d'arrivée (12) et de départ (13) ainsi que les deux ajutages de raccordement (27, 28) de la vanne (15) sont réalisés sous la forme d'ajutages de raccordement de tuyaux qui se trouvent en particulier dans des directions parallèles l'une à l'autre et dans le même plan radial.

10. Couvercle de filtre selon l'une des revendications 4 à 9,
caractérisé en ce que
les orifices d'enfichage (24) qui sont associés aux deux bras (34) du tendeur en fil d'acier (16), sont constitués dans les deux bras de maintien (18, 19) sous la forme de fentes ouvertes d'un seul côté.
